# EUROPEAN PATENT SPECIFICATION

(11) **EP 3 415 258 B1**
(45) Date of publication and mention of the grant of the patent: **14.10.2026**
(21) Application number: 18177175.9
(22) Date of filing: 12.06.2018
(51) Int. Cl.: B23K 1/00, B23K 1/008, B23K 1/19, B23K 1/20, B23K 35/28, B23P 15/04, F01D 5/14, B23K 101/00, B23K 103/10, B23K 103/14

(54) **HOLLOW TITANIUM AIRFOIL WITH TITANIUM COATING AND ALUMINIUM BRAZE**
TITANHOHLSCHAUFEL MIT TITANBESCHICHTUNG UND ALUMINIUMLOT
PROFIL AÉRODYNAMIQUE DE TITANE CREUX À REVÊTEMENT DE TITANE ET BRASURE D'ALUMINIUM

(30) Priority: 12.06.2017 US 201715620059
(43) Date of publication of application: 19.12.2018
(73) Proprietor: RTX Corporation, Farmington, CT 06032 (US)
(72) Inventor: DOLAN, Robert C., Coventry, CT Connecticut 06238 (US)
(74) Representative: Dehns

(56) References cited:
- WO-A2-2014/099067
- GB-A- 1 479 855
- US-A- 3 083 448
- US-A1- 2005 058 849
- US-A1- 2016 201 482

## Description

### BACKGROUND

This invention relates to hollow airfoils and a method of coating the same.

Titanium-based alloys are widely used for structural applications in the aerospace industry. These alloys provide good fatigue properties, erosion benefits relative to aluminum alloys, and are light weight compared to steel, stainless steels, and nickel alloys. While significant weight savings can be achieved with solid titanium components, even greater weight savings can be achieved using hollow structures.

It is difficult to create a complicated airfoil shape, especially a hollow airfoil. Hollow titanium airfoils are typically produced by diffusion bonding two machined cavity-containing plates on the neutral axis, hot forming and inflating the bonded assembly to achieve its final shape within complex dies, and finally post-thermal processing the airfoil's surface to remove any surface contamination. Much of the part cost is incurred by the complex bonding and forming process.

Common practice for joining hollow titanium structures is by brazing with titanium-nickel-copper alloys or by diffusion bonding. Brazing titanium with aluminum has been used for decades, but requires a narrow window of time and temperature. This stems from the fact that aluminum and titanium can form brittle intermetallic phases at the joint interface, if time and temperature are not properly controlled. Furthermore, brazing a hollow titanium airfoil with aluminum leaves a portion of the aluminum braze material exposed on the surface of the airfoil.

WO 2014/099067 forms the basis for the preamble of claims 1 and 9 and discloses a fan blade including first and second titanium portions that are secured to each other using an aluminum metal alloy braze. A method of manufacturing the fan blade is also disclosed.

US 3083448 discloses an article formed from titanium or a titanium-based alloy being coated at least in part by a eutectiferous titanium-base alloy.

GB 1479855 discloses a protective anti-erosive coating for titanium and titanium-alloy blades for turbine and turbo-compressor rotors.

US 2005/058849 discloses a titanium aluminide oxidation protective coating for titanium-based heat exchangers having a titanium-based braze.

### SUMMARY

According to a first aspect of the present invention, there is provided an airfoil as claimed in claim 1.

The first and second titanium portions may be secured to one another with the aluminum alloy braze.

The first titanium portion may include machined ribs.

The machined ribs may include undercuts that have an arcuate shape.

The second titanium portion may be a hot-formed sheet that provides a cover and the cover provides one side of the airfoil.

The airfoil may have a root and a tip defined by the first titanium portion.

The titanium coating may comprise titanium, titanium alloy, or a combination thereof.

The titanium coating may cover substantially all of the surface of the second titanium portion and at least part of the surface of the first titanium portion.

According to a second aspect of the present invention, there is provided a method of manufacturing an airfoil as claimed in claim 9.

The method may include machining the first titanium portion.

The method may include applying the aluminum alloy braze before the machining step.

The method may include pressing the second titanium portion to produce a cover that provides a side of the airfoil.

The method may include pickling or laser cleaning the first and second titanium portions.

The method may include applying the aluminum alloy braze after pickling or laser cleaning the first and second titanium portions.

The method may include bagging the first and second titanium portions prior to performing the heating step.

The method may include providing the titanium coating by cathodic arc deposition.

The titanium coating may comprise titanium, titanium alloy, or a combination thereof.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed in the appended claims. The foregoing and other features, and advantages of the present invention are apparent from the following detailed description taken in conjunction with the accompanying drawings in which:
Figure 1 is a perspective view of an example brazed titanium airfoil.
Figure 2A is a cross-sectional view of the airfoil shown in Figure 1 taken along line 2A-2A.
Figure 2B is an exploded enlarged view of a portion of the airfoil shown in Figure 2A.

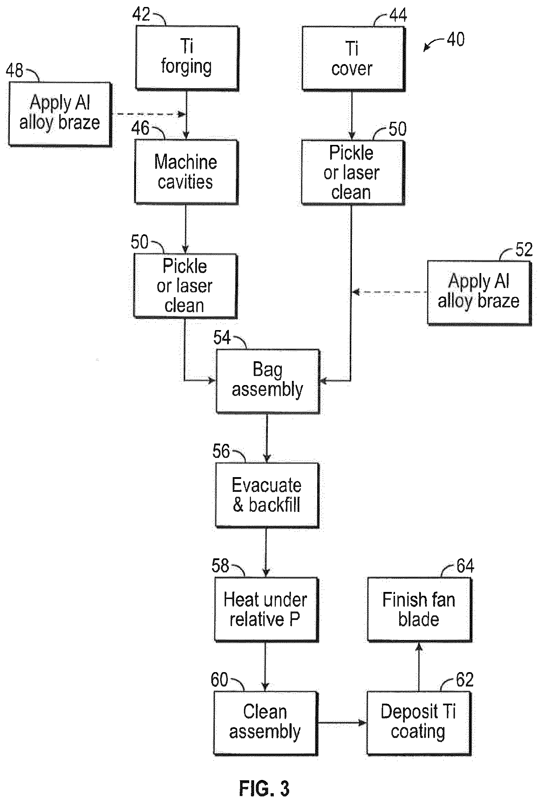

Figure 3 is a flow chart depicting an exemplary manufacturing method for the airfoil.
Figure 4 schematically depicts the brazing process.

### DETAILED DESCRIPTION

As shown and described herein, various features of the disclosure will be presented. Various embodiments may have the same or similar features and thus the same or similar features may be labeled with the same reference numeral, but preceded by a different first number indicating the Figure Number to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

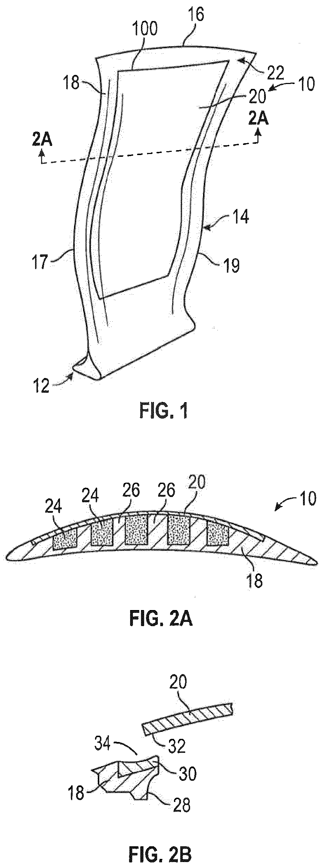

An airfoil 10 is schematically depicted in Figures 1 and 2. The airfoil 10 includes a root 12 supporting an airfoil 14 that extends to a tip 16. First and second titanium portions 18, 20 are brazed to one another to provide an exterior contour 22 of the airfoil 10.

In the example, the first titanium portion 18 is provided by a forged blank that is machined to remove material 24. Ribs 26 are provided that have undercuts 28 with an arcuate shape and within the interior of the first titanium portion 18 to reduce weight while providing airfoil structural integrity, ensuring blade fatigue life, and supporting the airfoil cover 20. The first titanium portion 18 provides the root 12 and one side of the airfoil 14 along with the tip 16. The first portion 18 also provides first and second edges that define airfoil leading and trailing edges 17, 19.

The second titanium portion 20 provides a cover that is secured over the interior of the first titanium portion 18 by a braze 34. A titanium cover would be used for its thermal expansion match with the titanium forging, its superior corrosion resistance relative to aluminum, its improved stiffness relative to aluminum, its improved erosion resistance relative to aluminum, and its improved foreign object debris/impact resistance relative to aluminum.

The braze 34 is provided on one or both of the first and second mating surfaces 30, 32, which are respectively provided by the first and second titanium portions 18, 20. The aluminum braze results in an aluminum braze joint 100. In one example, the braze 34 is an aluminum alloy, such as Al-Cu-Mn, having less than 3 wt% copper and less than 5 wt% manganese and having a solidus-liquidus range within 1175°F-1225°F (635°C to 662.3°C). The aluminum or aluminum alloy chosen for brazing would be pre-placed onto either the titanium cover or the titanium forging as a photo etched pre-form or cathodic arc deposited directly onto the titanium cover or the titanium forging. In one example, the entire surface of the side of the cover being brazed or the side of the forging being brazed would be cathodic arc deposited prior to machining the forging or prior to selective etching the titanium cover to only provide braze material at areas being joined.

A method 40 of forming the airfoil 10 is schematically illustrated at 40. A titanium forging (first titanium portion 18) is provided, as indicated by block 42. The proposed method of construction uses a near net shape titanium forging with certified mechanical properties.

The titanium forging is machined, as indicated at block 46, to provide structure similar to that shown in Figures 1 and 2, for example. The airfoil design may be tailored such that no internal foam inserts would be needed, although inserts may be used if desired. Prior to machining (in instances where no metallic foam inserts are used), an aluminum alloy braze may be applied, as indicated at block 48. Thus, the braze will be provided only on the raised surfaces, which provides the first mating surface 30, subsequent to machining.

A titanium cover (second titanium portion 20) is provided, as indicated at block 44. The titanium cover may be hot formed at processing conditions that ensure maintaining its certified mechanical properties, while achieving the desired shape for bonding. Alternatively, or in addition to, an aluminum alloy braze may be applied, as indicated at block 52, to the titanium cover subsequent to pickling or laser cleaning, as indicated at block 50. Pickling or laser cleaning provides a contaminant-free surface on the cover.

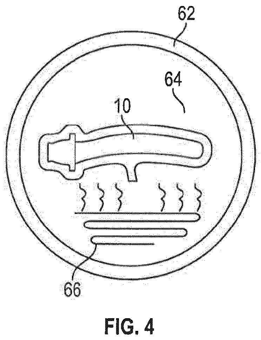

The cover is arranged over the titanium forging such that the first and second mating surfaces 30, 32 engage one another. The assembled airfoil 10 is inserted into a bag 64 (Figure 4), as indicated at block 54. The bag is a metallic bag, which may be constructed from a stainless steel or a nickel alloy foil, for example, that can be sealed.

In one example, the sealed bagged airfoil is loaded into a vacuum compression brazing furnace 62 having a heating element 66, which is shown in Figure 4. Oxygen and nitrogen within the bag are evacuated and the bag is backfilled with argon, as indicated at block 56. Evacuation and backfilling may be repeated multiple times to reduce the oxygen and nitrogen to an acceptable concentration within the bag and within the airfoil's internal cavities. Following the final evacuation, a negative atmosphere is maintained within the sealed bag. The magnitude of the bag's internal negative pressure is such that any positive pressure or vacuum external to the bag always provides force upon the titanium cover 20 and the machined airfoil 10 within the bag 64, throughout all subsequent heating, brazing and cooling.

Brazing could occur within a vacuum furnace capable of applying a positive pressure of argon, within an argon retort, within a furnace capable of maintaining a hard vacuum or within a vacuum furnace capable of maintaining a partial pressure of argon. In the first example, vacuum compression brazing furnace 62 is capable of applying a positive pressure of argon to the bagged airfoil 10 during heating to melt the aluminum alloy braze material and during subsequent cooling. If brazing within an argon retort, such an environment would be free of both oxygen and nitrogen to the extent acceptable for producing a finished product within the design criteria but meeting or bettering specified surface contamination requirements. If in a standard vacuum furnace, brazing would be accomplished by heating parts in a retort or other line-of-sight shielding at 5x10⁻⁴ torr (1.33 x 10⁻² Pa) or lower pressure within a temperature range of 1225°F to 1290°F (662.8°C to 698.9°C). Regardless of the furnace choice, time between 1175°F (635°C) on heating and 1175°F (635°C) on cooling would be controlled to produce a braze microstructure that conforms to metallurgical standards established by material characterization testing and airfoil component testing. Such standards would control amount of particulate, titanium aluminide, and eutectic intermetallic structure within the braze. Because the aluminum brazing temperature is lower than annealing temperatures used for titanium alloys such as Ti-6-4 and Ti-6-2-4-2, certified mechanical properties of the airfoil cover 20 and the airfoil forging 18 previously created during prior plate/sheet rolling, airfoil forging, and associated follow-on heat treatment will be maintained throughout all aluminum brazing thermal processing.

After brazing the airfoil surface comprises aluminum alloy braze at the joint formed by the first titanium portion and the second titanium portion. The airfoil surface at the aluminum braze joint is cleaned at block 60. Prior to coating the surface may be wiped with solvent, typically alcohol, to ensure that the surface to be coated is clean. The airfoil surface is coated with titanium to cover the exposed aluminum alloy braze as indicated at block 62. The titanium coating also covers at least part of the surface of the first titanium portion. The titanium coating also covers at least part of the surface of the second titanium portion. In some embodiments the titanium coating covers all or substantially all (greater than 90%) of the surface of the second titanium portion and at least part of the surface of the first titanium portion.

The titanium coating is deposited by cathodic arc deposition. The titanium coating has a thickness of 0.0005 inches to 0.007 inches (0.0127 millimeters to 0.1778 millimeters). The titanium coating may comprise titanium, a titanium alloy, or both. The titanium coating may comprise the same material as the first titanium portion, the second titanium portion or both.

The airfoil is then finished, if necessary, as indicated at block 64.

Coating the aluminum braze joint with a titanium coating protects the aluminum braze joint from degradation and helps to maintain the integrity of the airfoil.

The use of the terms "a," "an," "the," and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the present invention has been described in detail in connection with only a limited number of embodiments, it should be readily understood that the present invention is not limited to such disclosed embodiments. Rather, the present invention can be modified to incorporate any number of variations, alterations, substitutions, combinations, sub-combinations, or equivalent arrangements not heretofore described, but which are commensurate with the scope of the present invention as defined by the appended claims.

Accordingly, the present invention is not to be seen as limited by the foregoing description, but is only limited by the scope of the appended claims.

## Claims

1. An airfoil (10) comprising a first titanium portion (18), a second titanium portion (20), and an aluminum alloy braze joint (100) disposed there between, **characterised by**:
a titanium coating covering the aluminum alloy braze joint (100), at least part of the first titanium portion (18) and at least part of the second titanium portion (20), wherein the titanium coating has a thickness of 0.0005 inches to 0.007 inches (0.0127 millimeters to 0.1778 millimeters).

2. The airfoil (10) of claim 1, wherein the first and second titanium portions (18, 20) are secured to one another with aluminum alloy braze (34).

3. The airfoil (10) of claim 1 or 2, wherein the first titanium portion (18) includes machined ribs (26).

4. The airfoil (10) of any preceding claim, wherein the machined ribs (26) include undercuts (28) that have an arcuate shape.

5. The airfoil (10) of any preceding claim, wherein the second titanium portion (20) is a hot-formed sheet that provides a cover and the cover provides one side of the airfoil.

6. The airfoil (10) of any preceding claim, wherein the airfoil (10) has a root (12) and a tip (16) defined by the first titanium portion (18).

7. The airfoil (10) of any preceding claim, wherein the titanium coating comprises titanium, a titanium alloy, or a combination thereof.

8. The airfoil (10) of any preceding claim, wherein the titanium coating covers substantially all of a surface of the second titanium portion (20) and at least part of a surface of the first titanium portion (18).

9. A method of manufacturing an airfoil (10) comprising providing first (18) and second (20) titanium portions, applying an aluminum alloy braze (34) to at least one of the first (18) and second (20) titanium portions, and heating the airfoil (10) to melt the aluminum alloy braze (34) and join the first (18) and second (20) portions to one another to provide an airfoil with an aluminum alloy braze joint (100);
the method being **characterized by** providing a titanium coating to the airfoil,
the titanium coating covers the aluminum alloy braze joint (100), at least part of the first titanium portion (18), and at least part of the second titanium portion (20); and
the titanium coating has a thickness of 0.0005 inches to 0.007 inches (0.0127 millimeters to 0.1778 millimeters).

10. The method of claim 9, wherein the method further comprises machining the first titanium portion (18).

11. The method of claim 10, wherein the method further comprises applying the aluminum alloy braze (34) before the machining step.

12. The method of claim 9, 10 or 11, wherein the method further comprises pressing the second titanium portion (20) to produce a cover that provides a side of the airfoil (10).

13. The method of any of claims 9 to 12, wherein the method further comprises pickling or laser cleaning the first titanium portion (18), the second titanium portion (20) or both; optionally wherein the method comprises applying the aluminum alloy braze (34) after pickling or laser cleaning.

14. The method of any of claims 9 to 13, wherein the method further comprises bagging the first and second titanium portions (18, 20) prior to performing the heating step.

15. The method of any of claims 9 to 14, wherein:
the method further comprises providing the titanium coating by cathodic arc deposition; and/or
the titanium coating comprises titanium, titanium alloy, or a combination thereof.

## Patentansprüche

1. Schaufel (10), umfassend einen ersten Titanabschnitt (18), einen zweiten Titanabschnitt (20) und eine dazwischen angeordnete Aluminiumlegierungs-Lötverbindung (100), **gekennzeichnet durch**:
eine Titanbeschichtung, die die Aluminiumlegierungs-Lötverbindung (100), mindestens einen Teil des ersten Titanabschnitts (18) und mindestens einen Teil des zweiten Titanabschnitts (20) bedeckt, wobei die Titanbeschichtung eine Dicke von 0,0005 inches bis 0,007 inches (0,0127 millimeters bis 0,1778 millimeters) aufweist.

2. Schaufel (10) nach Anspruch 1, wobei der erste und der zweite Titanabschnitt (18, 20) mit Aluminiumlegierungslot (34) aneinander befestigt sind.

3. Schaufel (10) nach Anspruch 1 oder 2, wobei der erste Titanabschnitt (18) maschinell bearbeitete Rippen (26) beinhaltet.

4. Schaufel (10) nach einem der vorhergehenden Ansprüche, wobei die maschinell bearbeiteten Rippen (26) Hinterschneidungen (28) beinhalten, die eine bogenförmige Form aufweisen.

5. Schaufel (10) nach einem der vorhergehenden Ansprüche, wobei der zweite Titanabschnitt (20) ein warmgeformtes Blech ist, das eine Abdeckung bereitstellt, und die Abdeckung eine Seite der Schaufel bereitstellt.

6. Schaufel (10) nach einem der vorhergehenden Ansprüche, wobei die Schaufel (10) einen Fuß (12) und eine Spitze (16) aufweist, die durch den ersten Titanabschnitt (18) definiert sind.

7. Schaufel (10) nach einem der vorhergehenden Ansprüche, wobei die Titanbeschichtung Titan, eine Titanlegierung oder eine Kombination dessen umfasst.

8. Schaufel (10) nach einem der vorhergehenden Ansprüche, wobei die Titanbeschichtung im Wesentlichen die gesamte Oberfläche des zweiten Titanabschnitts (20) und mindestens einen Teil einer Oberfläche des ersten Titanabschnitts (18) bedeckt.

9. Verfahren zur Herstellung einer Schaufel (10), umfassend Bereitstellen eines ersten (18) und eines zweiten (20) Titanabschnitts, Aufbringen eines Aluminiumlegierungslots (34) auf mindestens einen von dem ersten (18) und dem zweiten (20) Titanabschnitt und Erhitzen der Schaufel (10), um das Aluminiumlegierungslot (34) zu schmelzen und den ersten (18) und den zweiten (20) Abschnitt miteinander zu verbinden, um eine Schaufel mit einer Aluminiumlegierungs-Lötverbindung (100) bereitzustellen;
wobei das Verfahren **gekennzeichnet ist durch** Bereitstellen einer Titanbeschichtung für die Schaufel,
die Titanbeschichtung die Aluminiumlegierungs-Lötverbindung (100), mindestens einen Teil des ersten Titanabschnitts (18) und mindestens einen Teil des zweiten Titanabschnitts (20) bedeckt; und
die Titanbeschichtung eine Dicke von 0,0005 inches bis 0,007 inches (0,0127 millimeters bis 0,1778 millimeters) aufweist.

10. Verfahren nach Anspruch 9, wobei das Verfahren ferner maschinelles Bearbeiten des ersten Titanabschnitts (18) umfasst.

11. Verfahren nach Anspruch 10, wobei das Verfahren ferner Aufbringen des Aluminiumlegierungslots (34) vor dem maschinellen Bearbeitungsschritt umfasst.

12. Verfahren nach Anspruch 9, 10 oder 11, wobei das Verfahren ferner Pressen des zweiten Titanabschnitts (20) umfasst, um eine Abdeckung herzustellen, die eine Seite der Schaufel (10) bereitstellt.

13. Verfahren nach einem der Ansprüche 9 bis 12, wobei das Verfahren ferner Beizen oder Laserreinigen des ersten Titanabschnitts (18), des zweiten Titanabschnitts (20) oder beider umfasst; optional wobei das Verfahren Aufbringen des Aluminiumlegierungslots (34) nach Beizen oder Laserreinigen umfasst.

14. Verfahren nach einem der Ansprüche 9 bis 13, wobei das Verfahren ferner Verpacken des ersten und des zweiten Titanabschnitts (18, 20) in einen Beutel vor Durchführen des Erhitzungsschritts umfasst.

15. Verfahren nach einem der Ansprüche 9 bis 14, wobei:
das Verfahren ferner Bereitstellen der Titanbeschichtung durch kathodische Lichtbogenabscheidung umfasst; und/oder
die Titanbeschichtung Titan, Titanlegierung oder eine Kombination dessen umfasst.

## Revendications

1. Profil aérodynamique (10) comprenant une première partie en titane (18), une seconde partie en titane (20) et un joint brasé en alliage d'aluminium (100) disposé entre elles, **caractérisé par** :
un revêtement en titane recouvrant le joint brasé en alliage d'aluminium (100), au moins une partie de la première partie en titane (18) et au moins une partie de la seconde partie en titane (20), dans lequel le revêtement en titane a une épaisseur de 0,0005 pouce à 0,007 pouce (0,0127 millimètre à 0,1778 millimètre).

2. Profil aérodynamique (10) selon la revendication 1, dans lequel les première et seconde parties en titane (18, 20) sont fixées l'une à l'autre par brasure en alliage d'aluminium (34).

3. Profil aérodynamique (10) selon la revendication 1 ou 2, dans lequel la première partie en titane (18) comporte des nervures usinées (26).

4. Profil aérodynamique (10) selon une quelconque revendication précédente, dans lequel les nervures usinées (26) comportent des contre-dépouilles (28) de forme arquée.

5. Profil aérodynamique (10) selon une quelconque revendication précédente, dans lequel la seconde partie en titane (20) est une feuille formée à chaud qui fournit un couvercle et le couvercle fournit un côté du profil aérodynamique.

6. Profil aérodynamique (10) selon une quelconque revendication précédente, dans lequel le profil aérodynamique (10) comporte une base (12) et une pointe (16) définies par la première partie en titane (18).

7. Profil aérodynamique (10) selon une quelconque revendication précédente, dans lequel le revêtement en titane comprend du titane, un alliage de titane ou une combinaison de ceux-ci.

8. Profil aérodynamique (10) selon une quelconque revendication précédente, dans lequel le revêtement en titane recouvre sensiblement la totalité d'une surface de la seconde partie en titane (20) et au moins une partie d'une surface de la première partie en titane (18).

9. Procédé de fabrication d'un profil aérodynamique (10) comprenant la fourniture d'une première (18) et d'une seconde (20) parties en titane, l'application d'une brasure en alliage d'aluminium (34) sur au moins l'une des première (18) et seconde (20) parties en titane, et le chauffage du profil aérodynamique (10) pour faire fondre la brasure en alliage d'aluminium (34) et joindre les première (18) et seconde (20) parties entre elles afin de fournir un profil aérodynamique avec un joint brasé en alliage d'aluminium (100) ;
le procédé étant **caractérisé par** l'application d'un revêtement en titane sur le profil aérodynamique,
le revêtement en titane recouvrant le joint brasé en alliage d'aluminium (100), au moins une partie de la première partie en titane (18) et au moins une partie de la seconde partie en titane (20) ; et
le revêtement en titane ayant une épaisseur de 0,0005 pouce à 0,007 pouce (0,0127 millimètre à 0,1778 millimètre).

10. Procédé selon la revendication 9, dans lequel le procédé comprend en outre l'usinage de la première partie en titane (18).

11. Procédé selon la revendication 10, dans lequel le procédé comprend en outre l'application de la brasure en alliage d'aluminium (34) avant l'étape d'usinage.

12. Procédé selon la revendication 9, 10 ou 11, dans lequel le procédé comprend en outre le pressage de la seconde partie en titane (20) pour produire un couvercle qui fournit un côté du profil aérodynamique (10).

13. Procédé selon l'une quelconque des revendications 9 à 12, dans lequel le procédé comprend en outre le décapage ou le nettoyage au laser de la première partie en titane (18), de la seconde partie en titane (20) ou des deux ; éventuellement, dans lequel le procédé comprend l'application de la brasure en alliage d'aluminium (34) après le décapage ou le nettoyage au laser.

14. Procédé selon l'une quelconque des revendications 9 à 13, dans lequel le procédé comprend en outre l'ensachage des première et seconde parties en titane (18, 20) avant la réalisation de l'étape de chauffage.

15. Procédé selon l'une quelconque des revendications 9 à 14, dans lequel :
le procédé comprend en outre la fourniture du revêtement en titane par dépôt à l'arc cathodique ; et/ou
le revêtement en titane comprend du titane, un alliage de titane ou une combinaison de ceux-ci.
